# DEMANDE DE BREVET EUROPEEN

(11) **EP 4 814 302 A1**
(43) Date de publication de la demande: **30.09.2026**
(21) Numéro de dépôt: 26164656.6
(22) Date de dépôt: 13.03.2026
(51) Int. Cl.: F03D 7/02, F03D 7/04

(54) **PROCEDE DE CONTROLE D'UNE FERME D EOLIENNES**

(30) Priorité: 25.03.2025 FR 2503075
(71) Demandeur: IFP Energies nouvelles, 92500 Rueil-Malmaison (FR)
(72) Inventeur: DUBUC, Donatien, 92852 RUEIL-MALMAISON CEDEX (FR)
(74) Mandataire: IFP Energies nouvelles

(57) **Abrégé**

Procédé de pilotage d'une ferme d'éoliennes, avec
A) une phase d'initialisation de maximisation de l'énergie produite:
A1) mise en œuvre d'un modèle initial MOD₀ de maximisation de l'énergie produite par la ferme d'éoliennes par simulation des sillages, selon des paramètres initiaux afin de déterminer un/des points de fonctionnement initiaux,
A2) application de ces points de fonctionnement initiaux aux actionneurs des éoliennes,

B) acquisition en temps réel de mesures de configuration de vent,
C) estimation des paramètres du modèle initial MOD₀ de maximisation d'énergie par un estimateur ESTIM à partir des mesures de configuration de vent
D) mise à jour du modèle initial MOD₀ avec l'estimation les phases B), C), et D) étant réitérées, avec l'obtention d'un modèle corrigé Mₙ
E) correction de la maximisation de l'énergie produite comprenant
E1) mise en œuvre du modèle corrigé MODₙ afin de déterminer des points de fonctionnement corrigés,
E2) application du/de ces points de fonctionnement corrigés aux actionneurs des éoliennes,

les étapes E1) et E2) étant réitérées.

## Description

### Domaine technique

La présente invention concerne le domaine du contrôle d'une ferme d'éoliennes pour maximiser la puissance produite et pour réduire la fatigue des éoliennes.

Une ferme d'éoliennes, également appelé parc éolien ou centrale éolienne, est un site regroupant une pluralité d'éoliennes produisant de l'électricité. Ce site peut être sur terre ou en mer. On distingue ainsi des fermes éoliennes terrestres et des fermes éoliennes «offshore », c'est-à-dire en mer.

Les éoliennes de ces fermes sont généralement des éoliennes à axe de rotation horizontal qui disposent d'un système pour orienter l'axe de rotation horizontal dans le sens de la direction du vent, afin de maximiser l'énergie récupérée par l'éolienne. Une éolienne permet de transformer l'énergie cinétique du vent en énergie électrique ou mécanique. Pour la conversion du vent en énergie électrique, elle se compose des éléments suivants :
- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite éventuellement une partie des composants électriques et électroniques (modulateur, commande, multiplicateur, générateur, ...) ;
- une nacelle montée au sommet du mât, abritant des composants mécaniques, pneumatiques, certains composants électriques et électroniques, nécessaires au fonctionnement de la machine (modulateur, commande, multiplicateur, générateur, ...). La nacelle peut tourner pour orienter le rotor dans la bonne direction ;
- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques ;
- éventuellement une transmission, composée notamment de deux axes (arbre mécanique du rotor et arbre mécanique de la machine électrique) reliés par un multiplicateur (boîte de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes et des fermes d'éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les chargements extrêmes de la structure (pales, mât et plate-forme).

### Technique antérieure

Les fermes d'éoliennes sont sujettes à un phénomène communément appelé «effet de sillage», lorsque les perturbations créées par les turbines situées en amont du parc éolien créent des conditions de production d'électricité sous-optimales pour les autres turbines. En effet, en aval de l'éolienne un sillage tourbillonnaire se forme, et dans ce sillage, la vitesse moyenne du vent est diminuée car l'éolienne a capté une partie de l'énergie cinétique du vent, et l'intensité de turbulence est augmentée. (On comprend « amont » et « aval » le positionnement d'une éolienne par rapport aux autres éoliennes selon la direction du vent dominant à un instant donné.)

De façon plus générale, lorsque les éoliennes sont regroupées dans un parc éolien, sous certaines conditions de vent, elles peuvent interagir entre elles, à travers cet effet de sillage. Lorsqu'une éolienne capte l'énergie cinétique du vent, la conservation de l'énergie entraîne une perte de vitesse et une augmentation de la turbulence dans le flux d'air en aval. Les éoliennes dans ce sillage subissent non seulement une chute significative de la production d'énergie électrique, mais également une fatigue mécanique accrue. Cet effet n'est pas négligeable à l'échelle d'un parc éolien, comme cela est relevé dans la publication Barthelmie RJ. et al. « Quantification de l'impact des sillages des éoliennes sur la production d'énergie dans les parcs éoliens en mer », Journal of Atmospheric and Oceanic Technology. 2010-08;27(8):1302-17, qui indique que la perte de puissance due aux effets de sillage pouvait atteindre 12,4 % et 23 % dans les parcs éoliens de Horns Rev et Lillgrund respectivement.

Cependant, il est possible d'influencer les sillages en contrôlant certains paramètres, que l'on peut modifier avec des actionneurs des éoliennes. Un de ces paramètres est l'angle de lacet, appelé aussi angle de désalignement, défini comme l'angle entre la direction du vent et l'axe orthogonal au plan du rotor, ce qui permet de dévier le sillage, permettant potentiellement aux éoliennes en aval de capter plus d'énergie. Les techniques visant à contrôler le sillage sont connues sous le nom de méthodes de direction de sillage. Pour maximiser leur production d'énergie individuelle, les éoliennes sont positionnées orthogonalement à la direction du vent incident (c'est-à-dire que l'angle de lacet est nul) par l'approche standard de contrôle de lacet, connue sous le nom de contrôle « avide » ou « glouton » (pour le terme « greedy » en anglais). Des valeurs non nulles de l'angle de lacet entraînent une perte de puissance pour l'éolienne. Dans le contrôle de direction de sillage, l'objectif est donc de passer d'une stratégie avide à une stratégie collective afin de maximiser la puissance délivrée par le parc éolien.

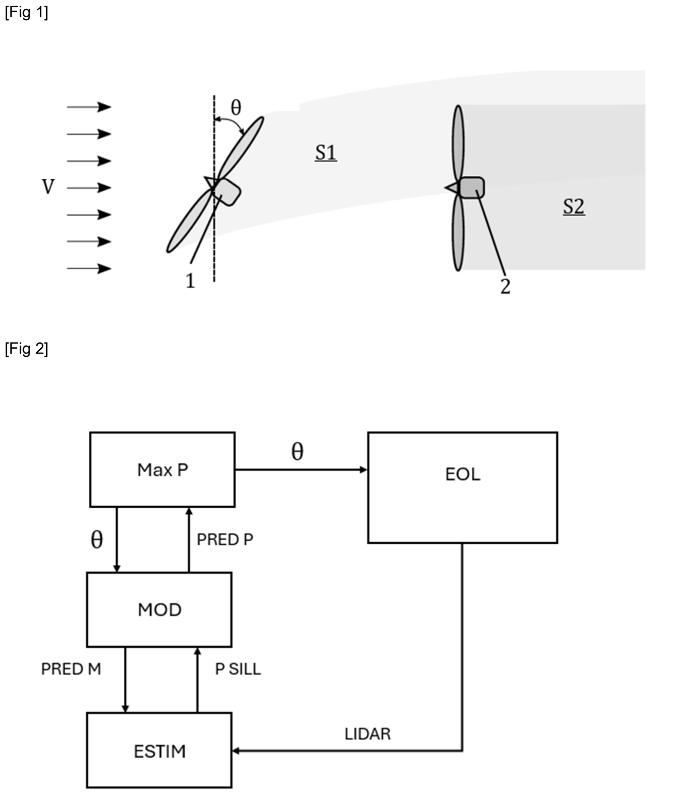

La figure 1 illustre le principe de la direction de sillage : c'est une vue en coupe selon un plan horizontal de deux éoliennes, une éolienne 1 dite amont et une éolienne 2 dite aval par rapport à une direction de vent V représentée par des flèches parallèles. La turbine de l'éolienne 1 amont a un angle de lacet Θ non nul, ce qui a pour effet de dévier son sillage S1, la turbine de l'éolienne 2 aval du flux d'air, qui, elle, a un angle de désalignement (dit aussi lacet) θ nul donc plus d'énergie, son sillage S2 étant dans la même direction que celle du vent V.

Pour mettre en œuvre ce type de stratégie, les méthodes les plus largement utilisées sont basées sur des modèles de parc éolien dits de faible fidélité qui prédisent la puissance totale en fonction des conditions de vent et des angles de lacet des éoliennes.

Étant donné que le temps de calcul de ces modèles est court, des méthodes d'optimisation peuvent être utilisées pour déterminer quel ensemble d'angles de lacet Θ maximise la puissance totale de la ferme d'éoliennes, et ensuite en dériver une table de recherche qui donne ces angles de lacet Θ en fonction des conditions de vent.

Cette méthode a déjà été utilisée sur des simulateurs (on peut se reporter à la publication Kheirabadi AC et al « Une revue quantitative du contrôle des parcs éoliens avec l'objectif de maximisation de la production d'énergie des parcs éoliens »,Journal of Wind Engineering and Industrial Aerodynamics. 2019;192:45-73) et expérimentalement (on peut se reporter à la publication Fleming P. et al. (« Test sur le terrain de la direction du sillage dans un parc éolien en mer », Wind Energy Science. 2017;2(1):229-39)).

Cependant, cette méthode, basée sur un modèle, est très dépendante de la qualité du modèle utilisé pour l'optimisation. Ainsi, une erreur de modélisation entraîne une optimisation qui ne fournit pas la véritable production maximale du parc éolien. Pour y remédier, il a été proposé d'utiliser des méthodes basées sur des données ou d'adapter les modèles utilisés avec les mesures disponibles sur le parc éolien, selon une approche dite en boucle fermée.

Ainsi, la publication Howland MF et al. (« Partie 1 : Conditions de couche limite atmosphérique conventionnellement neutre », Wind Energy Science. 2020-10-13;5(4):1315-38) cherche à estimer en temps réel les paramètres d'un modèle décrit dans la publication Shapiro CR et al. (« Modélisation des sillage de turbines éoliennes en lacet : une approche de ligne de levage ». Journal of Fluid Mechanics. 2018-04-25;841:R1) en utilisant un filtre de Kalman d'ensemble pour maximiser la puissance totale uniquement avec des mesures de puissance. La méthode est testée avec un simulateur LES (acronyme pour « Large Eddy Simulation » en anglais). La publication montre que la performance en boucle fermée n'est pas significativement meilleure que celle obtenue avec la méthode en boucle ouverte, même lorsque le modèle de puissance de la turbine est supposé parfaitement connu.

L'invention a alors pour but de remédier aux inconvénients des méthodes précitées, elle a notamment pour but de proposer un procédé de pilotage amélioré d'une ferme d'éoliennes visant à maximiser la puissance globale générée par ladite ferme.

L'invention a tout d'abord pour objet un procédé de pilotage d'une ferme d'éoliennes, chaque éolienne de ladite ferme présentant au moins un point de fonctionnement, dont son angle de désalignement θ, qui est réglable par au moins un actionneur.

Ledit procédé comprend :
A) une phase d'initialisation de maximisation de l'énergie produite par la ferme comprenant :
   A1) une étape de mise en œuvre d'un modèle initial MOD₀ notamment de type analytique, de maximisation de l'énergie produite par la ferme d'éoliennes par simulation des sillages des éoliennes, selon des paramètres donnés initiaux, afin de déterminer un/des points de fonctionnement initiaux, dont l'angle de désalignement, des éoliennes,
   A2) une étape d'application de ces points de fonctionnement initiaux aux actionneurs des éoliennes,
B) une phase d'acquisition en temps réel de mesures de configuration de vent,
C) une phase d'estimation des paramètres du modèle initial de maximisation d'énergie par un estimateur à partir des mesures de configuration de vent en temps réels obtenues à la phase d'acquisition B),
D) une phase de mise à jour des paramètres du modèle initial de maximisation d'énergie avec l'estimation obtenue à la phase C) pour obtenir un modèle corrigé,
   les phases B), C), et D) successives étant réitérées n fois selon un premier pas de temps P1, avec l'obtention, à chaque itération, d'un modèle corrigé mettant à jour les paramètres du modèle corrigé de l'itération précédente,
E) une phase de correction de la maximisation de l'énergie produite par la ferme comprenant
   E1) une étape de mise en œuvre du modèle corrigé obtenu à l'étape D) de maximisation de l'énergie produite par la ferme d'éoliennes, afin de déterminer un/des points de fonctionnement corrigés, dont l'angle de désalignement, des éoliennes,
   E2) une étape d'application du/de ces points de fonctionnement corrigés aux actionneurs des éoliennes,
   les étapes E1) et E2) successives étant réitérées selon un deuxième pas de temps P2 , notamment supérieur au premier pas de temps P1.

L'invention a ainsi mis au point un nouveau mode de pilotage de ferme d'éoliennes, en partant d'un modèle de maximisation de puissance prenant en compte le sillage des éoliennes, qui peut rester relativement simple et économe en calcul/traitement de données (peu gourmand donc), et que l'on vient adapter/corriger en temps réel, en exploitant des mesures de configuration de vent réalisées dans la ferme.

Ce nouveau mode de pilotage utilise une approche en boucle fermée, qui garantit un alignement plus étroit du modèle corrigé avec le fonctionnement réel de la ferme d'éoliennes, ce qui conduit à obtenir une maximisation plus élevée de l'énergie globalement produite par la ferme. (On comprend ici un pilotage en « boucle fermée », avec correction du modèle, par opposition à un pilotage en « boucle ouverte », qui vise plutôt un modèle pré-calibré).

Il est très avantageux de choisir un pas de temps P2 à l'étape E qui est supérieur au pas de temps P1 choisi lors de la réitération des phases B), C), et D) : En effet, entre chaque action, où des des consignes de nouveaux angles de lacet sont envoyées au parc éolien, les sillages se stabilisent pour que le modèle à estimer reste dans son domaine de validité. On « profite » donc de ce temps entre deux actions pour estimer au plus vite les paramètres utiles car les algorithmes d'estimation ont besoin d'un certain temps avant de converger.

Avantageusement, dans la phase A), le modèle initial de maximisation de l'énergie peut utiliser les paramètres initiaux suivants : l'amplitude maximale du déficit de vitesse U₀, la largeur du sillage σ₀ des éoliennes, l'amplitude de la déviation de l'angle de désalignement k_{d}.

On voit que le modèle initial selon l'invention peut « se contenter » de trois paramètres seulement à régler.

Avantageusement, dans la phase A), le modèle initial de maximisation de l'énergie peut être un simulateur dynamique de moyenne fidélité.

En effet, ce type de modèle est peu gourmand, contrairement à des modèles de sillage dits d'haute-fidélité, comme le modèle SOWFA mis à disposition par le National Renewable Energy Laboratory (NREL).

Les termes « faible », « moyenne », et « haute-fidélité » ont une signification bien connue de la personne du métier pour caractériser des modèles (la fidélité faisant référence à l'exactitude et à la précision des représentations et des analyses de données, une haute fidélité étant souvent indiquée par des taux d'erreur faibles et des coefficients de corrélation élevés entre les valeurs prédites et réelles).

Avantageusement, dans la phase A), le modèle initial de maximisation de l'énergie peut considérer des configurations de vent stationnaires (modèle le plus simple) ou turbulents (modèle plus complexe).

Avantageusement, dans la phase B), la mesure de configuration de vent, notamment la distribution de la vitesse et/ou de la direction du vent et/ou la vitesse et/ou la direction du vent, peut être opérée par des moyens de mesure comprenant au moins un capteur, notamment un capteur LIDAR ou au moins un anémomètre.

On peut ainsi utiliser, par exemple, des capteurs LIDAR à impulsion à plusieurs faisceaux, notamment quatre faisceaux, qui permettent de mesurer au moins des vitesses longitudinales de vent (selon l'axe d'orientation du vent) à plusieurs distances fixes.

Les moyens de mesure peuvent être fixés aux éoliennes, notamment sur ou au voisinage de leurs nacelles. Ils peuvent aussi être déportés (par exemple, pour une ferme d'éoliennes en mer offshore, être montés sur des bouées flottantes).

Avantageusement, dans la phase C), l'estimateur peut comprendre un filtre de Kalman sans parfum (non centré).

Dans un contexte dynamique, où les données arrivent en continu dans le temps (ici les mesures de vent en temps réel), des techniques d'estimation en temps réel, telles que les filtres de Kalman, sont pertinentes. Le filtre de Kalman sans parfum, ou non centré (dit UKF selon son acronyme anglais pour « Uncentered Kalman Filter » ) est particulièrement intéressant, car, contrairement au filtre de Kalman étendu (dit EKF selon son acronyme anglais pour « Extended Kalman Filter »)), cet estimateur a l'avantage d'être sans dérivée, donc il n'est pas nécessaire d'avoir explicitement des équations de modèle.

Un exemple de filtre de Kalman sans parfum / non centré est décrit dans la publication de Julier SJ. et al. « Une nouvelle approche pour le filtrage des systèmes non linéaires ». vol. 3. American Autom Control Council; 1995. p. 1628-32.

Avantageusement, dans la phase C), le filtre de Kalman sans parfum (UKF) peut estimer l'état de la ferme d'éoliennes (appelée aussi système) par une technique d'échantillonnage déterministe et utilise la transformation non centrée pour calculer les propriétés statistiques de ladite ferme d'éoliennes.

Les phases B), C), et D) successives sont de préférence réitérées n fois selon un premier pas de temps P1 d'au plus 10 secondes, notamment d'au moins 0,5 secondes, de préférence compris entre 1 et 5 secondes, par exemple de 3 secondes.

Les étapes E1) et E2) successives sont de préférence réitérées selon un deuxième pas de temps P2 au moins supérieur au temps de réponse des éoliennes à une commande d'actionnement par les actionneurs, notamment supérieur à 500 secondes, par exemple de l'ordre de 900 secondes.

On prend ainsi en compte le temps requis mis par les actionneurs pour appliquer de nouveaux points de fonctionnement à l'ensemble des éoliennes puis le temps requis par les éoliennes à stabiliser leur fonctionnement selon les nouveaux points de fonctionnement.

L'invention a également pour objet une ferme d'éoliennes, chaque éolienne de ladite ferme d'éoliennes présentant au moins un point de fonctionnement réglable, dont son angle de désalignement, qui est réglable par au moins un actionneur associé à ladite éolienne. Ladite ferme d'éoliennes comprend ou est connectée à des moyens informatiques mettant en œuvre le procédé de pilotage décrit plus haut afin d'appliquer des points de fonctionnement corrigés aux éoliennes de la ferme, dont leur angle de désalignement, par commande des actionneurs.

Il est préférable que ces moyens de calcul/ces moyens informatiques soient hébergés sur le site même de la ferme d'éoliennes. Il est cependant également possible de les déporter (en tout ou partie) hors du site de la ferme d'éoliennes, tant qu'ils peuvent être connectés à la ferme d'éoliennes par un réseau de communication performant (internet..).

L'invention a également pour objet tout moyen informatique, notamment un ordinateur, serveur ou calculateur configuré pour mettre en œuvre le procédé de pilotage d'une ferme d'éoliennes décrit plus haut.

L'invention a également pour objet tout produit programme d'ordinateur téléchargeable depuis un réseau de communication et/ou enregistré sur un support lisible par un ordinateur, un serveur ou un calculateur et/ou exécutable par un processeur, comprenant des instructions de code de programme pour la mise en œuvre du procédé de pilotage d'une ferme d'éoliennes décrit plus haut, lorsque ledit programme est exécuté sur un ordinateur, un serveur ou un calculateur.

L'invention a également pour objet tout support de stockage lisible par ordinateur, serveur ou calculateur et stockant des instructions, qui, lorsqu'elles sont exécutées par un ordinateur, serveur ou calculateur impliquent que l'ordinateur, le serveur ou le calculateur met en œuvre le procédé de pilotage d'une ferme d'éoliennes décrit plus haut.

D'autres caractéristiques et avantages du procédé selon l'invention apparaîtront à la lecture de la description ci-après d'exemples non limitatifs de réalisation, en se référant aux figures annexées et décrites ci-après.

### Liste des figures

La figure 1 représente deux éoliennes d'une ferme d'éoliennes, en coupe selon un plan horizontal à hauteur des nacelles des éoliennes, afin d'illustrer la notion d'angle de désalignement d'une éolienne.
La figure 2 représente un exemple de schéma-bloc d'un procédé de pilotage d'une ferme d'éoliennes selon l'invention.
La figure 3 représente en perspective trois éoliennes alignées d'une ferme d'éolienne, équipées chacune d'un capteur de type LIDAR pour mettre en œuvre un procédé de pilotage d'une ferme d'éoliennes selon l'invention.
La figure 4a représente deux graphes concernant une ferme d'éoliennes composée de trois éoliennes 1,2,3 alignées comme représentée à la figure 3, graphes dont les abscisses indiquent le temps exprimé en seconde, et dont l'ordonné indique
   - pour le graphe en partie supérieure, la valeur de l'angle de désalignement θ pour chacune des trois éoliennes 1,2,3, (l'éolienne 1 étant la plus amont des trois éoliennes alignées, par rapport à la direction du vent)
   - pour le graphe en partie inférieure, la valeur de puissance totale générée par la ferme, dans des conditions de vent stationnaire de 8 m.s⁻¹, selon qu'on applique le procédé de pilotage en boucle fermée selon l'invention (courbe C1), un procédé de pilotage en mode « glouton » de l'art antérieur (courbe C2) ou un procédé de pilotage de type « data-driven control » en anglais (courbe C3) , expression qu'on peut traduire par contrôle basé sur les données.

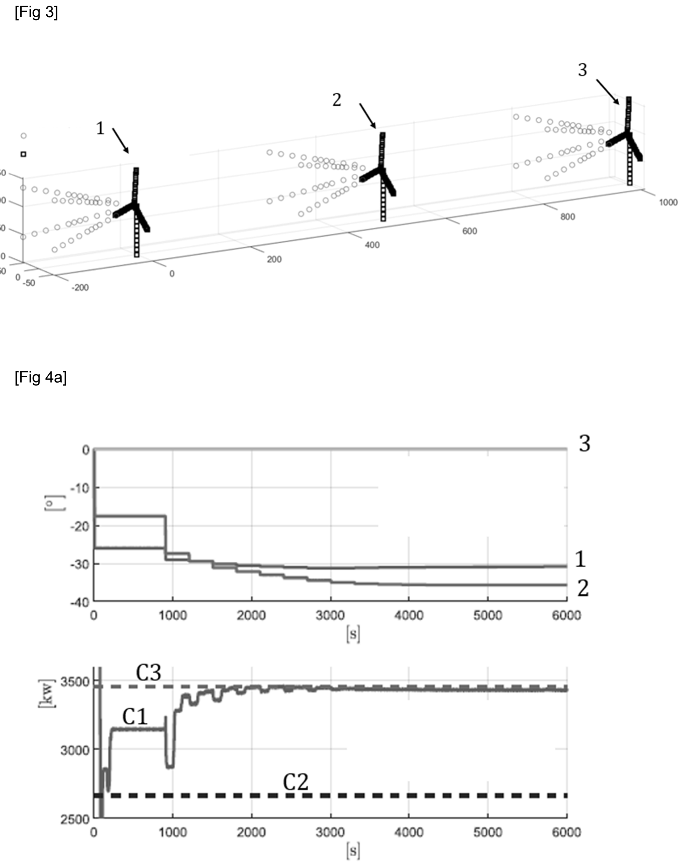

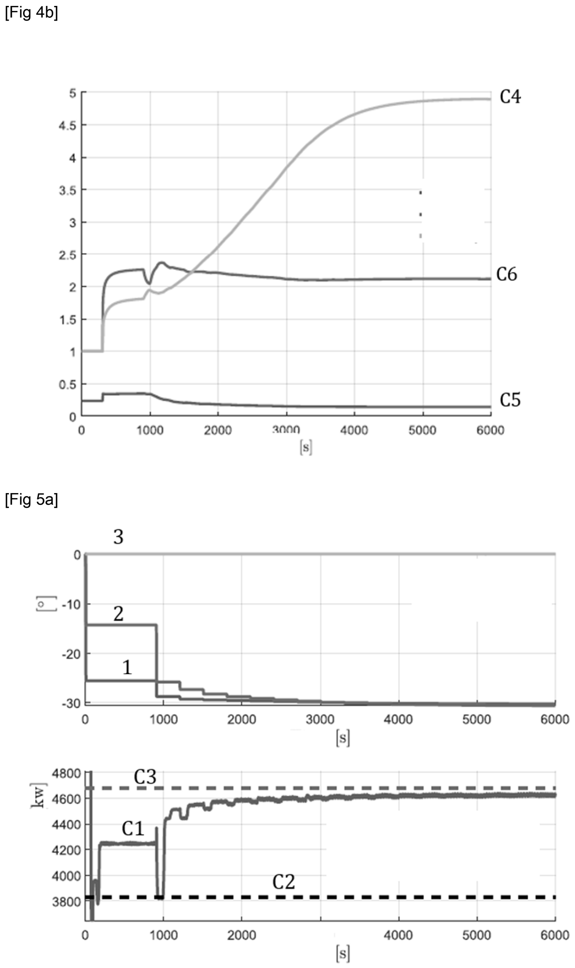

La figure 4b représente un graphe montrant l'évolution, en fonction du temps exprimé en secondes en abscisse, des trois paramètres du modèle utilisé : l'amplitude maximale du déficit de vitesse U₀ (courbe C4), la largeur du sillage σ₀ des éoliennes (courbe C5),, l'amplitude de la déviation de l'angle de désalignement k_{d} après traitement par un estimateur de type filtre de Kalman sans parfum UKF (courbe C6), toujours dans les conditions de vent stationnaire de 8 m.s⁻¹ de la figure 4a.
La figure 5a représente les mêmes types de graphes qu'à la figure 4a, mais dans des conditions de vent stationnaire de 9 m.s⁻¹.

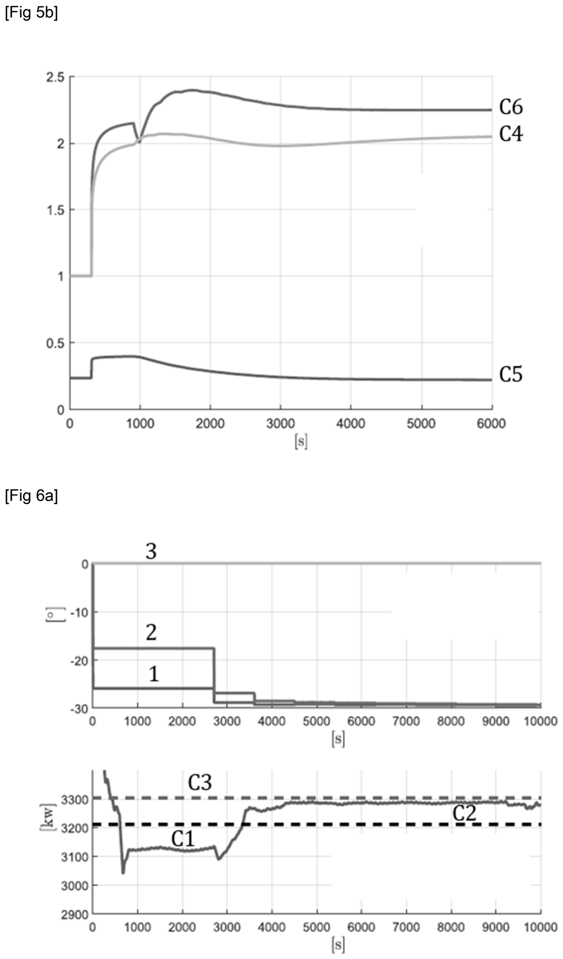

La figure 5b représente le même type de graphe qu'à la figure 4b, mais dans des conditions de vent stationnaire de 9 m.s⁻¹ de la figure 5a.
La figure 6a représente les mêmes types de graphes qu'à la figure 4a, mais dans des conditions de vent turbulent de 8 m.s⁻¹ avec une intensité de turbulence de 8%.

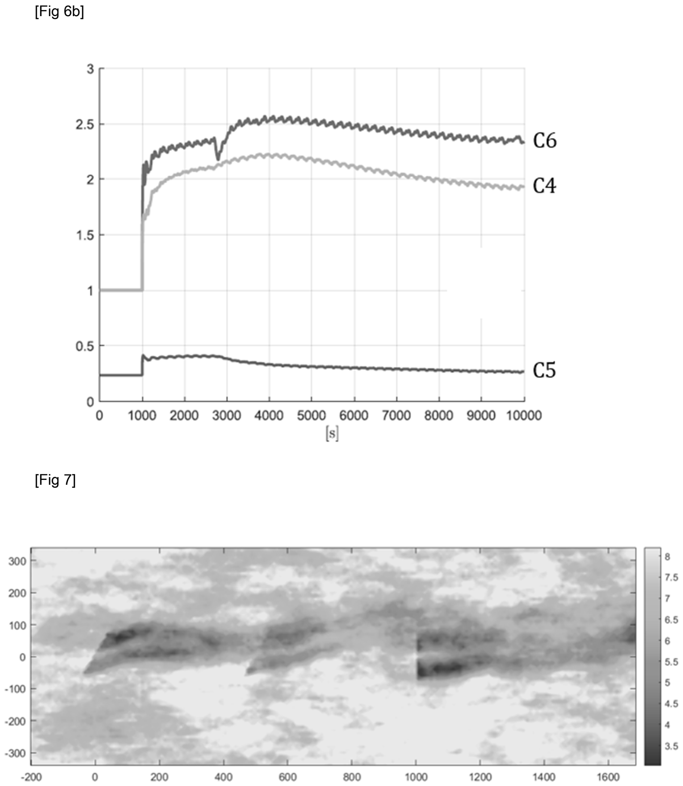

La figure 6b représente le même type de graphe qu'à la figure 4b, mais dans des conditions de vent turbulent de 8 m.s⁻¹ avec une intensité de turbulence de 8% de la figure 6a.
La figure 7 représente une distribution de vent turbulent simulé, l'échelle des teintes grisées étant exprimée en m/s.

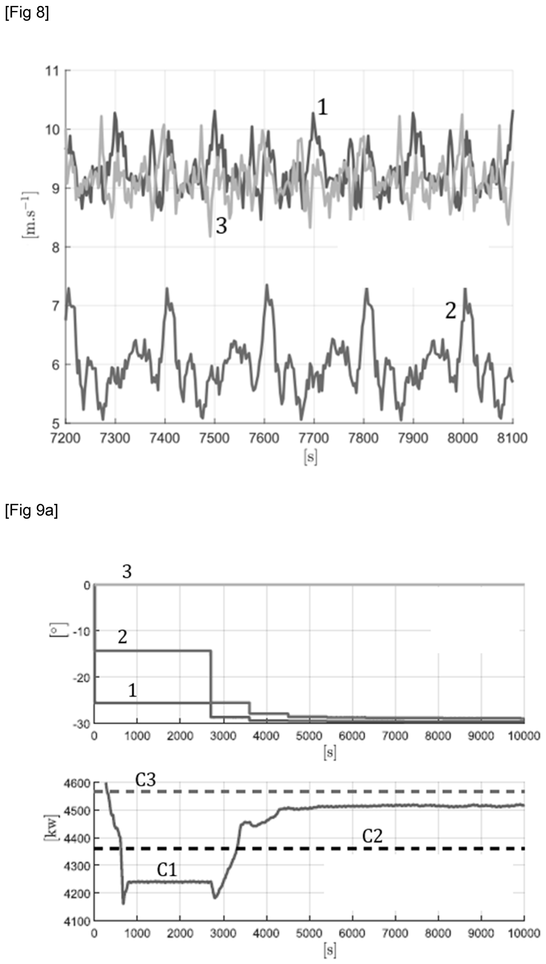

La figure 8 est un graphe représentant les mesures de vitesse de vent, exprimées en , en fonction du temps exprimé en secondes, mesures faites par chacune des capteurs LIDAR équipant chacune des trois éoliennes représentées à la figure 3, pour un point fixe mesuré à 90 mètres devant chacune des éoliennes, dans des conditions de vent turbulent.
La figure 9a représente les mêmes types de graphes qu'à la figure 4a, mais dans des conditions de vent turbulent de 9 avec une intensité de turbulence de 5%.

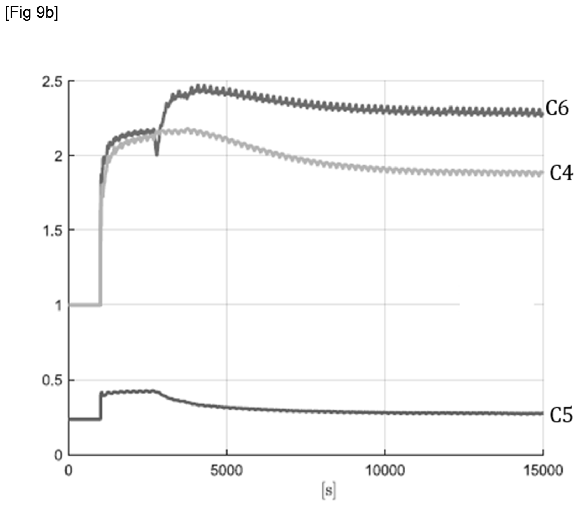

La figure 9b représente le même type de graphe qu'à la figure 4b, mais dans des conditions de vent turbulent de 9 avec une intensité de turbulence de 5% de la figure 9a.

L'ensemble des figures, notamment des éoliennes, reste très schématique, pas nécessairement à l'échelle ni dans la configuration spatiale réelle des éoliennes en position de fonctionnement.

### Description des modes de réalisation

### Définitions

Chaque éolienne (également appelée par abus de langage turbine) de la ferme d'éoliennes comprend au moins un actionneur pour modifier au moins un point de fonctionnement de l'éolienne. Des exemples d'actionneurs sont l'angle de désalignement θ (ou lacet, de l'anglais « yaw ») de l'éolienne par rapport au vent incident, l'angle d'inclinaison des pales « pitch » en anglais, le couple de la génératrice ou la vitesse du rotor. Une action sur l'angle de pitch, en coordination avec le couple de la génératrice ou la vitesse du rotor, permet notamment de brider la turbine, en réduisant aussi les effets de sillage qu'elle produit, ou plus généralement de modifier sa courbe de puissance. Agir sur l'angle de désalignement permet à l'éolienne de s'aligner ou se désaligner par rapport au vent, selon que l'on essaie de maximiser sa production individuelle ou de dévier le sillage qu'elle produit pour maximiser la production globale de la ferme.

Le ou les actionneurs utilisés peuvent être, notamment, l'actionneur de cap de la nacelle, les actionneurs d'orientation des pales et/ou le ou les actionneurs de pilotage en couple de la génératrice électrique

On comprend dans la présente demande par « type » d'éolienne le fait que la ferme d'éoliennes concernée peut ne comprendre qu'un seul type d'éolienne (toutes les éoliennes sont identiques, elles sont de même fonctionnement et de même dimensionnement notamment), ou que la ferme peut comprendre plusieurs types d'éolienne. Dans ce dernier cas de figure, à l'étape a) la détermination se fait pour chacun des types d'éolienne.

On comprend dans la présente demande par « angle de désalignement θ » l'angle entre l'axe orthogonal au plan du rotor et la direction du vent, appelé également « yaw » en anglais ou « lacet » en français.

On comprend dans la présente demande par « bridage » la réduction du rendement aérodynamique de l'éolienne en opération, afin par exemple de limiter sa puissance électrique convertie à un seuil déterminé, pour des conditions environnementales données. Cela peut se traduire par une modification de la vitesse de consigne de rotation des pales de l'éolienne et/ou une modification de l'orientation des pales, modifiant ainsi leur angle d'attaque et leur prise au vent.

On comprend dans la présente demande par « configuration de vent » les données relatives au vent, pouvant inclure la vitesse du vent, sa direction, son intensité de turbulence, voire d'autres paramètres environnementaux, comme la stabilité atmosphérique. Elle est désignée en anglais par le terme « bin ».

On comprend dans la présente invention par « sillage » sa définition connue pour les éoliennes, à savoir la région en aval d'une éolienne (par rapport à la direction du vent), où l'écoulement de l'air est ralenti, correspondant au déficit de vitesse tel que considéré ici, avec une augmentation de son intensité de turbulence.

On comprend dans la présente invention par « déficit de vitesse de vent δ » le déficit de vitesse de vent produit par des sillages des éoliennes en amont de l'éolienne considérée.

La présente invention concerne un procédé de contrôle et de pilotage en temps réel d'une ferme d'éoliennes afin d'en maximiser la production d'énergie, selon une approche en boucle fermée, en utilisant des données de mesure de vent en temps réel.

Le mode de réalisation non limitatif de l'invention qui sera décrit ci-après à l'aide des figures utilise des données de configuration de vent fournies par des capteurs LiDAR (pour l'acronyme anglais de « Light Detection And Ranging »), qui est une technologie de télédétection qui utilise des faisceaux laser pour mesurer, notamment, des distances et des mouvements en temps réel, en analysant les propriétés des faisceaux renvoyés vers leurs émetteurs.

Une ferme d'éoliennes, également appelée parc éolien ou centrale éolienne, est un site regroupant une pluralité d'éoliennes produisant de l'électricité. Chaque éolienne (également appelée par abus de langage turbine) de la ferme d'éoliennes comprend au moins un actionneur pour modifier au moins un point de fonctionnement de l'éolienne. Un exemple de point de fonctionnement est l'angle de désalignement θ (ou lacet, de l'anglais « yaw ») de l'éolienne.

D'autres points de fonctionnement peuvent être notamment le bridage de l'éolienne, ou la modification de la courbe de puissance de l'éolienne. La position des éoliennes au sein de la ferme d'éoliennes, appelée également agencement des éoliennes ou implémentation des éoliennes, est préalablement connue.

Dans la suite de la description, seul le contrôle/le pilotage de l'angle de désalignement θ est décrit et exemplifié.

Toutefois d'autres points de fonctionnement peuvent aussi être contrôlés par le procédé de pilotage selon l'invention, en plus de l'angle de désalignement, notamment le bridage statique, dynamique ou hélicoïdal impactant l'étendue et l'advection du sillage. Pour plus de détails sur le bridage dynamique, on peut se reporter, par exemple à l'article « Periodic dynamic induction control of wind farms : proving the potential in simulations and wind tunnel experiments » de J.A. Frederik and al, publiée en aout 2019 dans la publication Wind Energy Science Discussions.

Pour plus de détails sur le bridage hélicoïdal, on peut se reporter, par exemple, à l'article «The helix approach : using dynamic individual pitch control to enhance wake mixing in wind farms », de J.A Frederik and al, publié en aout 2020 dans la publication Wind Energy, issue 08, pages 1739-1751.

Dans la présente demande, les termes amont et aval sont définis selon la direction du vent (une éolienne en amont est soumise au vent avant une éolienne située en aval).

La figure 2 schématise l'ensemble du procédé de pilotage (appelé aussi procédé de contrôle) d'une ferme d'éoliennes en boucle fermée selon l'invention, dont les différentes étapes selon décrites plus en détails par la suite :

### On part :

- d'un modèle MOD de maximisation de puissance produite par une ferme, modèle qui va ensuite être corrigé et qui détermine la maximisation de puissance MAX P qui va définir les angles de désalignement à appliquer aux éoliennes
- un estimateur ESTIM, ici par exemple un filtre de Kalman sans parfum UKF
- d'un simulateur dynamique, notamment de moyenne fidélité, (quand le pilotage est une simulation avec une ferme d'éoliennes simulée, pour le tester) ou d'une ferme d'éolienne réelle (quand le pilotage est appliqué à une ferme réelle), l'un ou l'autre étant désignés à la figure sous le même sigle EOL,
lesdits outils utilisant ou produisant ou pilotant :
- des mesures LIDAR de configuration de vent mesurées par des capteurs LIDAR (par exemple un capteur LIDAR par éolienne)
- des angles de désalignement θ
- des prédictions de puissance PRED P
- des prédictions de mesure PRED M, correspondant aux estimations des mesures LIDAR par le modèle MOD
- des paramètres de sillage P SILL.

On voit que le modèle MOD à adapter/corriger :
- est alimenté par les paramètres de sillage P SILL depuis l'estimateur ESTIM, lui-même alimenté par des mesures de vent obtenues par les capteurs LIDAR,
- produit des prédictions de puissance PRED P pour déterminer des paramètres de maximisation MAX P de l'énergie globalement produite par la ferme, qui conduisent à la détermination des angles de désalignement θ des éoliennes réelles de la ferme ou du simulateur EOL.

On voit que l'estimateur ESTIM :
- est alimenté par les mesures des capteurs LIDAR
- reçoit des prédictions de mesure PRED M du modèle MOD
- produit les prédictions de sillage P SILL qui vont alimenter le modèle MOD.

On voit qu'il y a des itérations pour que le modèle MOD se corrige à l'aide des données fournies par l'estimateur ESTIM : des commandes MAX P d'angles de désalignement θ sont envoyées à la ferme ou au simulateur EOL, et des valeurs d'angles de désalignement θ sont également retournées au modèle MOD pour y être traitées : les commandes MAX P utilisent le modèle MOD pour trouver les angles de désalignement, et le modèle MOD a besoin de ces angles pour calculer une puissance.

On décrit ci-après les différents blocs du schéma général de la figure 2 et leurs interactions plus en détails:

### Le modèle MOD

On choisit un modèle de sillage simplifié à des fins de contrôle.

Pour simuler les phénomènes de sillage dans les parcs éoliens, de nombreux modèles et outils logiciels sont disponibles. Ceux-ci peuvent être d'haute-fidélité, comme SOWFA, qui utilise des modèles de simulation de grandes tourbillons, ou de faible fidélité, comme FLORIS, , du NREL, ou FarmShadow^{™} , d'IFPEN (notamment décrit dans la publication F.Blondel et al. «Mixing-Length Approach for Analytical Wake-Added Turbulence Modelling in Wind Farms, WES (on-going), 2023 » et dans la publication F.Blondel et al. « An adaptation of the super-Gaussian wake model for yawed wind turbines », TORQUE 2020 ), qui mettent en œuvre plusieurs modèles de sillage "analytiques" (On comprend par « analytique » des modèles relativement simples, qui font appel, en théorie, uniquement sur une formulation mathématique qui a été obtenue par expérience, ici on vise cependant des modèles utilisant des principes physiques, et qui ne sont donc pas entièrement analytiques au sens strict du terme). En raison de leur faible coût computationnel, ces derniers sont actuellement préférés pour le contrôle des fermes éoliennes. Ils supposent des conditions stationnaires, fournissant une représentation moyenne du champ de vitesse du vent de la ferme d'éoliennes sur des périodes de quelques minutes.

Bien que ces modèles aient été affinés au fil des ans, ils sont également devenus plus complexes, avec un grand nombre de paramètres à régler. Pour garantir une adaptation des paramètres précise et robuste, le modèle doit être simple, avec un nombre limité de paramètres à estimer ayant une influence significative sur les caractéristiques du sillage.

Il est proposé ici un nouveau modèle, inspiré à la fois de la publication Shapiro CR et al., « Modélisation des sillage de turbines éoliennes en lacet : une approche de ligne de levage ». Journal of Fluid Mechanics. 2018-04-25;841:R1 pour le déficit, et de la publication Jiménez A et al. « Application d'une technique LES pour caractériser la déviation du sillage d'une turbine éolienne en lacet ». Wind Energy. 2010-09;13(6):559-72 pour la déviation : $Δ u = {U}_{0} \left(\frac{1 - \sqrt{1 - {C}_{T}}}{8 {σ}_{0}^{2}}\right) exp \left(-\frac{1}{2 {σ}_{0}^{2}}{\left(y-{y}_{c}\left(x\right)\right)}^{2}\right)$ avec ${y}_{c} \left(x\right) = {k}_{d} \times \frac{{C}_{T} sin γ}{4 {k}_{d 0}} \left(1-\frac{1}{1 + 2 {k}_{d 0} x}\right)$ où Δu représente le déficit de vitesse et C_{T} le coefficient de poussée. x et y sont normalisés par le diamètre de la turbine.

Pour obtenir la vitesse à une turbine i, uᵢ, on fait la sommation linéaire des n déficits de vitesse uniques en amont évalués à l'emplacement en aval : ${u}_{i} = {U}_{∞} - {\sum }_{j = 1}^{n} Δ u$ où U_{∞} est la vitesse du vent en écoulement libre. Il est alors possible d'avoir le champ de vitesse à l'échelle du parc éolien. De plus, les puissances des turbines sont calculées en utilisant la théorie du disque d'actionneur (connue également sous la terminologie anglaise « actuator disk theory »).

On peut ainsi déduire la puissance totale du parc et résoudre le problème d'optimisation suivant : ${γ}_{max} = {argmax}_{γ} {P}_{farm} \left(γ\right)$ où γ est un vecteur contenant les angles de lacet des turbines et P_{farm} représente la puissance totale du parc éolien.

Cette équation est résolue en utilisant l'algorithme BOBYQA de Powel (On peut se reporter pour plus de détails à la publication Powell MJ. « L'algorithme BOBYQA pour l'optimisation contraignante sans dérivées ». Cambridge NA Rapport NA2009/06, Université de Cambridge, Cambridge. 2009;26:26-46) .

Dans ce modèle (donné à titre d'exemple seulement), il n'y a que trois paramètres à régler : U₀ qui détermine l'amplitude maximale du déficit de vitesse, σ₀ qui fixe la largeur du sillage et k_{d} qui influence l'amplitude de la déviation de l'angle de lacet.

### Le simulateur EOL

Dans le cas où l'on teste le procédé de pilotage de l'invention avec un simulateur et non une ferme d'éolienne réelle, le simulateur peut être par exemple le simulateur FAST.Farm, un simulateur dynamique de fidélité dite moyenne, décrit dans la publication Jonkman JM et al., « Guide de l'utilisateur FAST.Farm et manuel théorique », National Renewable Energy Laboratory Golden, CO, USA; 2021). Le simulateur peut également être le simulateur FarmShadow dynamique, mentionné plus haut et développé par IFPEN, et de représentativité similaire.

### L'estimateur ESTIM

Dans un contexte dynamique tel que celui du simulateur FAST.Farm (et d'un parc éolien réel), où les données arrivent en continu dans le temps, des techniques d'estimation en temps réel, telles que les filtres de Kalman, sont considérées. Étant donné qu'on traite un modèle non linéaire pour lequel nous avons un simulateur, mais aucune formulation mathématique explicite, ce qui est difficile à obtenir, nous utiliserons le filtre de Kalman sans parfum (UKF), comme décrit dans la publication précitée de Julier SJ. Contrairement au filtre de Kalman étendu (EKF), cet estimateur a l'avantage d'être sans dérivée, donc il n'est pas nécessaire d'avoir explicitement des équations de modèle, ce qui est avantageux. L'UKF estime l'état du système par une technique d'échantillonnage déterministe appelée points sigma et utilise la transformation non centrée pour calculer les propriétés statistiques du système.

Si l'on considère le système discret non linéaire suivant : ${x}_{k} = f \left({x}_{k - 1}, {u}_{k - 1}\right) + {υ}_{k - 1}$ ${y}_{k} = h \left({x}_{k}, {u}_{k}\right) + {ε}_{k}$ où
xₖ est un vecteur de dimension n représentant l'état du système,
uₖ₋₁ représente le vecteur d'entrée, yₖ le vecteur de sortie (ou mesures) et vₖ et εₖ sont des bruits blancs gaussiens définis comme suit : ${v}_{k} ∼ N \left(0, Q\right) et {ε}_{k} ∼ N \left(0, R\right) .$

Pour estimer l'état xₖ avec un filtre de Kalman sans parfum UKF, les étapes suivantes sont à réaliser :
- Calcul des points sigma : ${X}_{k - 1} = \left[{\hat{x}}_{k - 1} {\hat{x}}_{k - 1}+\sqrt{{α}^{2} \left(n+κ\right)}\sqrt{{P}_{k - 1}} {\hat{x}}_{k - 1}-\sqrt{{α}^{2} \left(n+κ\right)}\sqrt{{P}_{k - 1}}\right]$
   (2) Équations de mise à jour temporelle : ${X}_{k} = f \left({X}_{k - 1}, {u}_{k - 1}\right)$ ${\hat{x}}_{k}^{-} = {\sum }_{i = 0}^{2 n} {w}_{i}^{\left(m\right)} {X}_{i , k}$ ${P}_{{x}_{k}} = Q + {\sum }_{i = 0}^{2 n} {w}_{i}^{\left(c\right)} \left({X}_{i , k}-{\hat{x}}_{k}^{-}\right) {\left({X}_{i , k}-{\hat{x}}_{k}^{-}\right)}^{T}$
   (3) Équations de mise à jour de mesure : ${Y}_{k} = h \left({X}_{k}, {u}_{k}\right)$ ${\hat{y}}_{k}^{-} = {\sum }_{i = 0}^{2 n} {w}_{i}^{\left(m\right)} {Y}_{i , k}$ ${P}_{{y}_{k}} = R + {\sum }_{i = 0}^{2 n} {w}_{i}^{\left(c\right)} \left({Y}_{i , k}-{\hat{y}}_{k}^{-}\right) {\left({Y}_{i , k}-{\hat{y}}_{k}^{-}\right)}^{T}$ ${P}_{{x}_{k} , {y}_{k}} = {\sum }_{i = 0}^{2 n} {w}_{i}^{\left(c\right)} \left({X}_{i , k}-{\hat{x}}_{k}^{-}\right) {\left({Y}_{i , k}-{\hat{y}}_{k}^{-}\right)}^{T}$
   (4) Correction : ${K}_{k} = {P}_{{x}_{k} , {y}_{k}} {P}_{{y}_{k}}^{- 1}$ ${\hat{x}}_{k} = {\hat{x}}_{k}^{-} + {K}_{k} \left({y}_{k}-{\hat{y}}_{k}^{-}\right)$ ${P}_{k} = {P}_{{x}_{k}} - {K}_{k} {P}_{{y}_{k}} {K}_{k}^{T}$
   où (·)i représente la i-^{ème} colonne, avec x₀ et P₀ donnés
   $\sqrt{{P}_{k - 1}}$ peut être calculé avec la décomposition de Cholesky.

Les vecteurs de poids w(^{m}) et w(^{c}) pour effectuer la transformation sans parfum sont donnés par : ${w}_{0}^{\left(m\right)} = \frac{λ}{n + λ}$ ${w}_{0}^{\left(c\right)} = \frac{λ}{n + λ} + 1 - {α}^{2} + β$ ${w}_{i}^{\left(m\right)} = {w}_{i}^{\left(c\right)} = \frac{1}{2 \left(n+λ\right)}$

Pour tous, i = 1,.... , 2n
avec λ=α²(n+κ) - n

Les paramètres α, β et κ influencent la distribution des points sigma. Leurs valeurs habituelles sont : $α = {10}^{- 3}$ $β = 2$ $κ = 0$

Afin de régler le filtre de Kalman sans parfum UKF, les matrices de covariance Q et R, qui sont généralement inconnues, sont utilisées pour influencer la vitesse de convergence et la robustesse au bruit du filtre.

Dans le cas présent, ${\hat{x}}_{k} = \left[{U}_{0}, {σ}_{0}, {k}_{d}\right] , f \left({\hat{x}}_{k - 1}, {u}_{k - 1}\right)$ et ${\hat{y}}_{k} = h \left({{\hat{x}}_{k}}_{¯}, {u}_{k}\right)$ correspondent aux points de mesure LiDAR donnés par le modèle décrit plus haut.

En effet, dans la configuration présente, chaque éolienne dispose d'un LiDAR à impulsion à quatre faisceaux multi-portée sur sa nacelle, permettant des mesures de vitesse longitudinale à plusieurs distances fixes. Ce LiDAR correspond à celui utilisé dans la publication Guillemin F et al.. « Reconstruction en temps réel d'un champ de vent tridimensionnel à partir de mesures LiDAR de nacelle » (Journal of Physics: Conference Series. juin 2018;1037(3):032037) , mesurant la vitesse du vent à dix distances de 50 à 200 mètres.

La figure 3 illustre les points de mesure (symbolisés par des cercles alignés dans 4 directions différentes à partir de chaque turbine), considérés dans un parc éolien de trois éoliennes 1,2,3 alignées, chaque turbine étant espacée de quatre diamètres de la turbine adjacente.

### Configuration du simulateur

Les modèles de « Dynamic Wake Meandering » (DWM) sont très utiles pour des fins de contrôle, car ils sont relativement rapides à évaluer et capturent des phénomènes dynamiques. Ces modèles décrivent les traînées par une succession de traceurs, auxquels des modèles statiques sont appliqués. Ces traceurs sont ensuite advectés (« advected » en anglais) selon le flux d'air entrant. Le simulateur FAST.Farm est basé sur ces principes, couplés avec les modèles aérodynamiques d'OpenFAST (tels que décrits dans NREL. Dépôt Github OpenFAST; 2024. https://github.com/OpenFAST/openfast), permettant de contrôler des turbines éoliennes individuelles, tout en simulant la propagation dynamique des traînées à travers le parc éolien.

Pour contrôler les différentes turbines éoliennes, FAST.Farm utilise une bibliothèque de liens dynamiques (DLL) appelée Super Controller (SC), qui communique avec des instances d'OpenFAST qui simulent le comportement des turbines éoliennes individuelles en utilisant des contrôleurs DISCON, bien connus dans le domaine, standardisés.

Il a été proposé dans le cadre de la présente invention une interface disponible en open source (sur IFP Energies Nouvelles. Dépôt Github WFCRL ; 2024.

https://github.com/ifpen/wfcrl-env). Cette interface utilise un canal de « Message Passing Interface » (MPI) pour communiquer entre Python et FAST.Farm, permettant d'imposer des références d'angle de lacet θ et de tangage ainsi que le couple du générateur aux différents contrôleurs de turbines éoliennes. L'interface peut également être utilisée pour récupérer des mesures de ces contrôleurs, telles que la puissance électrique. En plus de déployer l'interface, l'exécutable FAST.Farm a également été modifié afin qu'il puisse simuler des mesures LiDAR telles que celles décrites dans la figure 3.

### Mise en œuvre du pilotage selon l'invention en boucle fermée

Le contrôle en boucle fermée complet peut maintenant être mis en œuvre sur FAST.Farm. Le parc éolien est composé de 3 turbines NREL-5MW alignées, espacées de quatre diamètres (le diamètre est de 126 mètres) comme montré dans la figure 3.

Ces turbines sont décrites notamment dans la publication Jonkman J . et al « Definition of a 5-MW reference Wind Turbine for Offshore System development », issue de Technical Report NREL/TP-500-38060 de février 2009 de National Renewable Energie Laboratory.

Le modèle MOD utilisé pour effectuer le contrôle (ou pilotage, expressions similaires dans le cadre du présent texte) est celui décrit plus haut, avec le vecteur de paramètres à estimer : ${x}_{k} = \left[{U}_{0}, {σ}_{0}, {k}_{d}\right] .$

Le filtre UKF utilise des mesures LiDAR comme illustré à la figure 3.

Enfin, toutes les τd secondes, (ce qui correspond à un exemple de pas P2 tel que mentionné plus haut, alors que le pas P1 mentionné plus haut correspond, lui, à la fréquence des mesures faites par les capteurs LIDAR qui peut par exemple être de l'ordre de la seconde) le modèle adapté est utilisé pour maximiser la puissance produite totale de la ferme, en mettant à jour les angles de lacet θ via l'algorithme BOBYQA de Powell décrit plus haut.

La procédure est illustrée dans la figure 2 décrite plus haut.

### Résultats

### Exemple 1

Pour tester l'algorithme, on a d'abord considéré un scénario avec un vent stationnaire à une vitesse de 8 m s⁻¹.

Pour ce cas sans turbulence, la mise à jour de l'angle de lacet est τd= 300 s.

Les résultats sont présentés dans la figure 4a, montrant l'évolution des angles de lacet θ et de la puissance totale du parc éolien pour chacune des trois éoliennes 1, 2 et 3, et la figure 4b, illustrant l'évolution temporelle des estimations des paramètres du modèle.

Après la phase d'initialisation, la figure 4a montre que l'algorithme converge vers les angles de lacet θ [-30.9,-35.7,0] ∘ après 3000 s, correspondant à une puissance totale de 3433 kW.

L'effet recherché est clairement présent : on observe une augmentation significative de la puissance, de presque 9,2 % , par rapport à l'estimation initiale (courbe C1 selon l'invention), et plus de 28,7 % par rapport au contrôle glouton (courbe C2) où toutes les turbines ont un angle de lacet θ nul.

Pour savoir à quel point on est proche de la puissance maximale que le parc éolien peut délivrer, on a également testé un algorithme basé sur les données comme celui présenté dans la publication Bizon Monroc C. et al.( « Actor Critic Agents for Wind Farm Control. » 2023, American Control Conference (ACC). 2023:177-83).

Cette méthode sans modèle fonctionne sur une base d'essai-erreur, et est donc très proche du véritable maximum. La valeur finale obtenue (après un temps très long) est rapportée dans la figure 4a : on observe qu'elle est très proche (courbe C3) de celui obtenu avec la méthode selon l'invention.

La figure 4b montre également la convergence des paramètres, mais la courbe C4 concernant le paramètre U₀ semble converger plus lentement que la courbe C5 concernant le paramètre σ₀ et que la courbe C6 concernant le paramètre k_{d}.

Il est possible de prévoir une paramétrisation plus agressive du filtre de Kalman sans parfum UKF pour améliorer encore la vitesse de réponse de la méthode selon l'invention, à savoir le calibrer pour qu'il converge plus rapidement, éventuellement au détriment de sa sensibilité au bruit de mesure.

### Exemple 2

Pour tester la méthode sous d'autres conditions de vent, on a ensuite choisi la vitesse du vent libre stationnaire à 9 m s⁻¹.

Les résultats sont présentés dans les figures 5a et 5b : Les performances observées sont similaires à celles obtenues précédemment à 8 m s⁻¹ : les angles de lacet θ convergent après environ 3000 secondes pour la courbe C1 de la méthode selon l'invention, et on obtient une amélioration de 22,4 % par rapport à la stratégie de contrôle gloutonne selon la courbe C2. Et encore une fois, la puissance obtenue est très proche de la puissance maximale réelle (selon la courbe C3).

Ainsi, même sous différentes conditions de vent, la méthode selon l'invention parvient à augmenter significativement la puissance totale du parc éolien.

### Exemple 3

Pour rendre le cas aussi réaliste que possible, on a aussi considéré un flux de vent turbulent à 8 m s⁻¹ à la hauteur du moyeu avec une intensité de turbulence de 8 %.

Un aperçu du champ de ce vent turbulent à 8 m s⁻¹ avec une intensité de turbulence de 8 % est donné dans la figure 7, tel que simulé avec FAST.farm : On peut noter que le champ de vent n'est pas du tout homogène, aussi bien spatialement que temporellement.

Un échantillon des mesures LiDAR pour les trois éoliennes qui a été considéré pour cet exemple 3 est montré dans la figure 8, (zoom temporel) pour un point situé à 90 mètres en face des trois turbines. La courbe 3 en gris clair correspond à l'éolienne 3, la courbe 1 en noir en partie supérieure du graphe correspond à l'éolienne 1 et la courbe en partie inférieure correspond à l'éolienne 2, comme indiqué à la figure.

Dans ce cas, on a pris τd = 900 s (correspondant au pas P2 évoqué plus haut).

La puissance de contrôle en boucle fermée est ici moyennée sur 10 minutes pour une meilleure lisibilité.

Les résultats sont décrits dans les figures 6a et 6b : Pour ces conditions de vent, les angles de lacet θ convergent vers [-29,6, -29,8, 0]° après 6000 s, ce qui correspond à une puissance totale moyenne de 3288 kW.

Comme dans le cas stationnaire des exemples 1 et 2, l'algorithme se stabilise bien, avec une augmentation claire de la puissance totale obtenue grâce au contrôle en boucle fermée (courbe C1 selon l'invention).

La figure 6a rapporte aussi la puissance obtenue en boucle ouverte selon la courbe C2: les angles de lacet θ correspondants sont déduits d'une configuration FLORIS et calculés à l'aide de l'algorithme Serial Refine décrit dans la publication Fleming PA al. « Serial-Refine Method for Fast Wake-Steering Yaw Optimization. Journal of Physics: Conference Series" 2022;2265(3):032109.

On peut voir que la stratégie de contrôle en boucle fermée selon l'invention (courbe C1) a considérablement amélioré la puissance produite par la ferme par rapport à la stratégie en boucle ouverte (courbe C2), même si le modèle est beaucoup moins précis.

On observe également qu'avec la méthode de l'invention, on est proche du vrai maximum obtenu avec la méthode basée sur les données (courbe C3).

La figure 6b montre également la convergence des paramètres, avec la courbe C4 concernant U₀ , la courbe C5 concernant le paramètre σ₀ et la courbe C6 concernant le paramètre k_{d}, de façon similaire à la figure 4b.

### Example 4

De manière similaire à l'exemple 3, on a répété la méthode mais pour un vent turbulent de 9 m. s⁻¹ avec une intensité de turbulence de 5 %. Les résultats, illustrés dans les figures 9a et 9b, montrent un comportement similaire au cas turbulent de l'exemple 3 précédent : la convergence est atteinte autour de 6000 secondes (courbe C1), et il y a une augmentation notable de la puissance totale au fil du temps.

De même, la puissance en boucle fermée (courbe C1) est supérieure à la puissance en boucle ouverte (courbe C2), et la méthode de l'invention permet de s'approcher ici aussi du vrai maximum.

Cela démontre que la méthode peut être efficacement adaptée à différentes conditions de vent, notamment stationnaires ou turbulents.

En conclusion, il a été testé, dans cette série d'exemples, un algorithme sur FAST.Farm permettant un contrôle complet en boucle fermée d'un parc éolien.

Cet algorithme consiste à adapter en temps réel le modèle décrit en utilisant un estimateur de type filtre de Kalman sans parfum UKF. Le modèle adapté est ensuite utilisé pour trouver un ensemble d'angles de lacet θ qui maximisent la puissance totale produite.

Ces angles sont ensuite transmis à FAST.Farm via une interface, qui, à son tour, fournit des mesures de vitesse LiDAR pour l'estimateur.

Deux cas ont donc été étudiés : un où le vent est stationnaire, et un autre, plus proche de la réalité, où le champ de vent est turbulent.

Dans tous les cas, il a été observé une augmentation significative de la puissance totale délivrée par le parc éolien.

Le scénario turbulent, en particulier, met en évidence la robustesse de la méthode : même avec un simulateur plus réaliste, un modèle simple avec peu de paramètres à adapter comme celui utilisé dans la méthode selon l'invention permet d'obtenir de bons résultats dans une approche de boucle fermée.

Les cas étudiés ont également montré qu'avec l'invention, on est très proche, en termes de puissance produite, des vrais maximums trouvés avec une méthode basée sur les données, et qu'on dépasse systématiquement les puissances obtenues avec une méthode en boucle ouverte.

On peut souligner qu'avec l'invention on peut estimer les paramètres globaux qui définissent les modèles de sillage (déficit de vitesse, largeur des sillages et déviation notamment) et pas seulement un seul paramètre qui se limiterait à estimer l'angle de sillage seulement par exemple.

## Revendications

1. Procédé de pilotage d'une ferme d'éoliennes, chaque éolienne de ladite ferme présentant au moins un point de fonctionnement, dont son angle de désalignement (θ), qui est réglable par au moins un actionneur,
**caractérisé en ce que** ledit procédé comprend :
A) une phase d'initialisation de maximisation de l'énergie produite par la ferme comprenant :
A1) une étape de mise en œuvre d'un modèle initial (MOD₀), notamment de type analytique, de maximisation de l'énergie produite par la ferme d'éoliennes par simulation des sillages des éoliennes, selon des paramètres donnés initiaux, afin de déterminer un/des points de fonctionnement initiaux, dont l'angle de désalignement (θ₀), des éoliennes,
A2) une étape d'application de ces points de fonctionnement initiaux aux actionneurs des éoliennes,
B) une phase d'acquisition en temps réel de mesures de configuration de vent,
C) une phase d'estimation des paramètres du modèle initial (MOD₀) de maximisation d'énergie par un estimateur (ESTIM) à partir des mesures de configuration de vent en temps réels obtenues à la phase d'acquisition B),
D) une phase de mise à jour des paramètres du modèle initial (MOD₀) de maximisation d'énergie avec l'estimation obtenue à la phase C) pour obtenir un modèle corrigé MOD₁,
les phases B), C), et D) successives étant réitérées n fois selon un premier pas de temps P1, avec l'obtention, à chaque itération, d'un modèle corrigé Mₙ mettant à jour les paramètres du modèle corrigé MODₙ₋₁ de l'itération précédente,
E) une phase de correction de la maximisation de l'énergie produite par la ferme comprenant
E1) une étape de mise en œuvre du modèle corrigé (MODₙ) obtenu à l'étape D) de maximisation de l'énergie produite par la ferme d'éoliennes, afin de déterminer un/des points de fonctionnement corrigés, dont l'angle de désalignement (θₙ), des éoliennes,
E2) une étape d'application du/de ces points de fonctionnement corrigés aux actionneurs des éoliennes,
les étapes E1) et E2) successives étant réitérées selon un deuxième pas de temps P2, notamment supérieur au premier pas de temps P1.

2. Procédé de pilotage d'une ferme d'éoliennes selon la revendication précédente, **caractérisé en ce que**, dans la phase A), le modèle initial (MOD₀ ) de maximisation de l'énergie utilise les paramètres initiaux suivants : l'amplitude maximale du déficit de vitesse (U₀), la largeur du sillage (σ₀) des éoliennes, l'amplitude de la déviation de l'angle de désalignement (k_{d}).

3. Procédé de pilotage d'une ferme d'éoliennes selon l'une des revendications précédentes, **caractérisé en ce que**, dans la phase A), le modèle initial (MOD₀) de maximisation de l'énergie est un simulateur dynamique, notamment de moyenne fidélité.

4. Procédé de pilotage d'une ferme d'éoliennes selon l'une des revendications précédentes, **caractérisé en ce que**, dans la phase A), le modèle initial (MOD₀) analytique de maximisation de l'énergie considère des configurations de vent stationnaires ou turbulents.

5. Procédé de pilotage d'une ferme d'éoliennes selon l'une des revendications précédentes, **caractérisé en ce que**, dans la phase B), la mesure de configuration de vent, notamment la distribution de la vitesse et/ou de la direction du vent et/ou la vitesse et/ou la direction du vent, est opérée par des moyens de mesure comprenant au moins un capteur, notamment un capteur (LIDAR) ou au moins un anémomètre.

6. Procédé de pilotage d'une ferme d'éoliennes selon la revendication précédente, **caractérisée en ce que** les moyens de mesure sont fixés aux éoliennes, notamment au voisinage de leurs nacelles, ou sont déportés.

7. Procédé de pilotage d'une ferme d'éoliennes selon l'une des revendications précédentes, **caractérisé en ce que**, dans la phase C), l'estimateur (ESTIM) comprend un filtre de Kalman sans parfum (UKF).

8. Procédé de pilotage d'une ferme d'éoliennes selon la revendication précédente, **caractérisé en ce que**, dans la phase C), le filtre de Kalman sans parfum (UKF) estime l'état de la ferme d'éoliennes par une technique d'échantillonnage déterministe et utilise une transformation non centrée pour calculer les propriétés statistiques de ladite ferme d'éoliennes.

9. Procédé de pilotage d'une ferme d'éoliennes selon l'une des revendications précédentes, **caractérisé en ce que** les phases B), C), et D) successives sont réitérées n fois selon un premier pas de temps P1 d'au plus 10 secondes, notamment d'au moins 0,5 secondes, de préférence compris entre 1 et 5 secondes.

10. Procédé de pilotage d'une ferme d'éoliennes selon l'une des revendications précédentes, **caractérisé en ce que** les étapes E1) et E2) successives sont réitérées selon un deuxième pas de temps P2 supérieur au temps de réponse des éoliennes à une commande d'actionnement par les actionneurs, notamment supérieur à 500 secondes.

11. Ferme d'éoliennes, chaque éolienne de ladite ferme d'éoliennes présentant au moins un point de fonctionnement réglable, dont son angle de désalignement (θ), qui est réglable par au moins un actionneur associé à ladite éolienne, **caractérisée en ce que** ladite ferme d'éoliennes comprend ou est connectée à des moyens informatiques mettant en œuvre le procédé de pilotage selon l'une des revendications précédentes afin d'appliquer des points de fonctionnement corrigés aux éoliennes de la ferme, dont leur angle de désalignement (θ), par commande des actionneurs.
